# EUROPÄISCHE PATENTSCHRIFT

(11) **EP 0 968 441 B1**
(45) Veröffentlichungstag und Bekanntmachung des Hinweises auf die Patenterteilung: **25.05.2005**
(21) Anmeldenummer: 99906043.7
(22) Anmeldetag: 13.01.1999
(51) Int. Cl.: G01S 13/42

(54) **RADARSIGNAL-VERARBEITUNGSVERFAHREN**
METHOD FOR PROCESSING RADAR SIGNALS
PROCEDE DE TRAITEMENT DE SIGNAUX RADAR

(30) Priorität: 17.01.1998 DE 19801617
(43) Veröffentlichungstag der Anmeldung: 05.01.2000
(73) Patentinhaber: DaimlerChrysler AG, 70567 Stuttgart (DE)
(72) Erfinder: SCHNEIDER, Robert, D-89233 Neu-Ulm (DE)
(74) Vertreter: Straub, Bernd
(86) Internationale Anmeldenummer: PCT/DE1999/000038
(87) Internationale Veröffentlichungsnummer: WO 1999/036796

(56) Entgegenhaltungen:
- WO-A-99/27384
- US-A- 4 595 925
- US-A- 5 241 317
- US-A- 5 633 705
- M.I. SKOLNIK: "Introduction to Radar Systems" 1981 , MCGRAW-HILL , SINGAPORE XP002103542 14789 siehe Seite 546, Zeile 6 - Zeile 14

## Beschreibung

Die Erfindung betrifft ein Radarsignal-Verarbeitungsverfahren zur Schätzung der Höhe eines Objekts über einer reflektierenden Fläche.

Über die Messung der Zielentfernung hinaus ist bei Radaranordnungen häufig eine Lokalisierung von Objekten in Azimut und Elevation bzw. Höhe zur besseren Bewertung der Situation im Überwachungsbereich wünschenswert. Hierzu sind eine Reihe von Realisierungsformen bekannt. In der Regel sind solche bekannten Realisierungsformen mit einer ausgedehnten Apertur der Antennenanordnung verbunden, die eine Bündelung der Strahlungsleistung bewirkt. Damit kann ein Ausschnitt des gesamten Überwachungsbereichs gezielt erfaßt werden. Der Überwachungsbereich wird dann in mehrere Raumwinkelabschnitte unterteilt, was eine genauere Aussage über die Position eines Objektes möglich macht. Diese Apertur kann real vorhanden oder synthetisch sein (SAR-Prinzip). Sie aber teilweise mit dem zur Verfügung stehenden Platz für den Einbau der Antennenanordnung, insbesondere im Frontbereich von Kraftfahrzeugen, schlecht vereinbar.

Zur Richtungsauflösung bei Radaranordnungen ist auch das Prinzip des Amplitudenoder Phasen-Monopuls-Betriebs bekannt, bei welchem kleine Antennenabmessungen möglich sind. Die Antenne muß dabei über wenigstens zwei verschiedene, sich überlappende Einzeldiagramme verfügen.

Die bekannten Lösungen zur Lokalisierung von Objekten innerhalb des Überwachungsbereichs sind dadurch im Regelfall von der benötigten Anordnung her aufwendig und hinsichtlich der Kosten der Anordnung und/oder deren Platzbedarf insbesondere bei der Verwendung in Kraftfahrzeugen nachteilig.

Aus dem US-Patent US 5,241,317 ist ein militärisches Radarsystem zur Schätzung der Flughöhe von Flugzeugen bekannt Bei diesen wird zur Schätzung der Flughöhe des Flugzeuges eine zeitliche Veränderung der Entfernung des Flugobjekts von der Radaranordnung bestimmt und eine Intensitätsmodulation des Empfangssignals gemessen und aus dem zeitlichen Verlauf der Intensitätsmodulation über die Objektentfernung eine Aussage über die Flughöhe über der reflektierenden Fläche abgeleitet. Diese stationäre, militärische Radaranordnung ist ausschließlich für die Schätzung der Flughöhe eines Flugzeuges geeignet und nicht für den Einsatz in einem Fahrzeug geeignet.

Aus dem US-Patent US 5,633,705 B 1 ist ein Verfahren zur Klassifikation eines Straßenverkehrsobjektes bekannt, bei dem mittels einer Radaranordnung die relative Lage, d. h. den Abstand zu einem Straßenverkehrsobjekt bestimmt wird und bei dem mit Hilfe eines Stereovideosystems basierend auf der Erkenntnis des Abstandes die Höhenausdehnung des durch das Stereovideosystems erfassten Straßenverkehrsobjekts klassifiziert wird. Im Rahmen der Klassifizierung wird das klassifizierte Straßenobjekt hinsichtlich seiner Unfallrelevanz bewertet Dieses Verfahren erweist sich als sehr aufwendig.

Weiterhin ist aus der vorangemeldeten, nachveröffentlichten europäischen Patentanmeldung EP 1 040 364 A 1 ein Verfahren zur Klassifikation eines Straßenverkehrsobjektes bekannt, bei dem mittels einer Radaranordnung eine binäre, also zweiwertige Klassifikation in Overhead-Objekte, d. h. Objekte, die durch das eigene Fahrzeug unterfahren werden können, beispielsweise hohe Brücken, und Ground-Level -Objekte, d. h. Objekte, die auf dem Boden stehen und nicht unterfahrbar sind, vorgenommen. Wird ein Objekt als Ground-Level-Objekt klassifiziert, so wird der Fahrer beispielsweise vor einem Unfall mit einem gefährlichen Objekt nämlich den Ground-Level-Objekten gewarnt bzw. in dem Betrieb des Fahrzeuges, insbesondere automatisch eingegriffen. Diese europäische Patentanmeldung stellt ausschließlich einen Stand der Technik gem. Art. 54 Abs. 3 EPÜ dar, die gemäß der Entscheidung der Großen Beschwerdekammer G 1/03, Punkte 2.1 und 3 der Entscheidungsgründe, als Grundlage für folgenden Disclaimer dient: "wobei die Klassifikation des Straßenverkehrsobjektes nicht ausschließlich nur zwischen Ground-Level-Objekten und Overhead-Objekten unterscheidet".

Aufgabe der vorliegenden Erfindung ist es daher, ein Verfahren zur Verarbeitung von Radarsignalen anzugeben, welches auch bei Einsatz von Radaranordnungen geringer Komplexität und geringen Raumbedarfs eine Lokalisierung von Objekten, insbesondere eine Schätzung der Höhe der Objekte über einer reflektierenden Fläche ermöglicht.

Die Erfindung ist im Patentanspruch 1 beschrieben. Die Unteransprüche enthalten vorteilhafte Ausgestaltungen und Weiterbildungen der Erfindung.

Das erfindungsgemäße Verfahren führt eine Lokalisierung der Objekte allein auf der Ebene der Signalverarbeitung durch und erlaubt die Verwendung aufwandsarmer und von den Abmessungen her kleiner Radaranordnungen, deren Antennenanordnung keine oder nur eine grobe Richtungsauflösung vorgibt Insbesondere ist keine Mehrstrahlfähigkeit und kein Schwenken des Antennendiagramms erforderlich.

Das erfindungsgemäße Verfahren ist vorgesehen für den Einsatz in Situationen, bei welchen sich die Radaranordnung und die zu erfassenden Objekte oberhalb einer im wesentlichen ebenen Fläche befinden, welche für die Sendesignale der Radaranordnung und/oder die von den Objekten zurückgestreuten Echosignale reflektierende Eigenschaften aufweist. Das erfindungsgemäße Verfahren macht sich dadurch eine Eigenschaft der genannten Fläche zunutze, welche ansonsten überwiegend als störend empfunden wird. Eine vollständige Spiegelung von Signalen an der Fläche wird dabei nicht vorausgesetzt, der Anteil von Objektechos im gesamten Empfangssignal, welcher auf Reflexionen an der Fläche zurückzuführen ist, muß lediglich das Summen in meßbarem Umfang beeinflussen. Flächen, welche diese Eigenschaften erfüllen, sind je nach Frequenzbereich der Radarsignale und Einfallswinkel bei der Reflexion beispielsweise asphaltierte oder betonierte Fahrbahnen, Wasseroberflächen oder auch die Erdoberfläche. Das Maß der tolerierbaren Rauhigkeit oder Unebenheit der Fläche ist primär abhängig von der Betriebswellenlänge der Radaranordnung und vom Einfallswinkel.

Die Erfindung nutzt den Umstand aus, daß bei oberhalb einer solchen reflektierenden Fläche befindlicher Radaranordnung durch die Überlagerung von direktem und reflektiertem Signalweg die Empfindlichkeit des Radars im Überwachungsbereich ein Interferenzmuster zeigt. Dieser Effekt, der durch die dabei auftretenden Orte destruktiver Interferenz zu Signaleinbrüchen bei der Objektdetektion führen kann, wird bei der vorliegenden Erfindung gezielt ausgenutzt, indem der Zeitverlauf der Intensität von Echosignalen detektiert und ausgewertet wird.

Die Erfindung macht sich ferner zunutze, daß bei den typischen Anwendungsfällen von Radaranordnungen, insbesondere Kfz-Radaranordnungen primär solche Objekte von Interesse sind, welche eine wesentliche Komponente der Relativgeschwindigkeit zwischen Objekt und Radaranordnung aufweisen, welcher aus einer Verringerung des Objektabstands zur Radaranordnung resultiert, also Objekte, die sich relativ auf die Radaranordnung zu bewegen. Dies können insbesondere entgegenkommende Fahrzeuge oder ortsfeste Objekte sein. Für die Bewertung der Relevanz solcher Objekte innerhalb einer Verkehrssituation kann die Höhe der Objekte über der Fahrbahn ein wesentliches Beurteilungskriterium liefern.

Bei gegebener Höhe der Antenne über der reflektierenden Fläche ist das Interferenzmuster an sich festgelegt und kann durch Rechnung bestimmt, simuliert oder gemessen werden. Das Vorhandensein einer annähernd ebenen reflektierenden Fläche ist im Regelfall für die in Betracht kommenden Entfernungsbereiche in den meisten Situationen erfüllt.

Die relative Bewegung eines Objekts innerhalb des Interferenzmusters des Strahlungsfeldes der Antennenanordnung führt zu einer Intensitätsmodulation des diesem Objekt zuzuordnenden Empfangssignals. Das Muster der Intensitätsmodulation ist abhängig von der Entfernung des Objekts von der Radaranordnung, der Höhe des Objekts über der reflektierenden Fläche sowie Betrag und Richtung der Relativbewegung und für jede Kombination von Werten dieser Parameter charakteristisch. Bei gegebenem Interferenzmuster des Strahlungsfeldes kann daher einer der vorstehend genannten Zielparameter bei Bekanntsein der übrigen Parameter aus der Intensitätsmodulation des Empfangssignals bestimmt werden. Bei einem typischen Einsatzfall des erfindungsgemäßen Verfahrens in einem auf einer Fahrbahn bewegten Kraftfahrzeug seien für ein erstes Beispiel die zusätzlichen Annahmen gemacht, daß die Höhe des Objekts über der reflektierenden Fläche während der Auswertezeit sich nicht wesentlich ändert und daß die Relativbewegung zwischen Objekt und Radaranordnung im wesentlichen rein radial erfolge. Diese Annahmen sind für die relevanten Ziele einer Kfz-Radaranordnung, nämlich feststehende Hindernisse oder Umgebungsobjekte, vorausfahrende Fahrzeuge oder entgegenkommende Fahrzeuge in dem interessierenden Entfernungs- und Winkelbereich im Regelfall gerechtfertigt. Die Zielentfernung und deren zeitliche Veränderung sind durch die Fähigkeit des Radars zur fortlaufenden Entfernungsmessung eines Objekts gegeben. Die Höhe des Objekts als unbekannte Größe läßt sich dann durch Messung des Musters der Intensitätsmodulation und der Verknüpfung mit dem vorgegebenen Interferenzmuster und der gemessenen Relativbewegung des Objekts zumindest ungefähr abschätzen. Ein ungefährer Schätzwert für die Höhe des Objekts ist im Regelfall ausreichend zur Bewertung der Relevanz des Objekts, insbesondere deren Eingruppierung in eine von mehreren Objektgruppen.

Für die Gewinnung eines Schätzwerts für die Objekthöhe kann insbesondere eine Berechnungsvorschrift vorgesehen sein, bei welcher beispielsweise die Objektentfernung, die Periodenlänge der Intensitätsmodulation und die während einer Periodendauer zurückgelegte Wegstrecke des Objekts als Eingangsgrößen dienen und welche einen Schätzwert für die Objekthöhe als Ausgangswert liefert. Alternativ kann die Schätzung der Objekthöhe auch in Form einer tabellarischen Zuordnungsvorschrift vorgenommen werden. Schließlich ist es auch möglich, die Schätzung der Objekthöhe als explizite Größe zu überspringen und mittels der Eingabe der Meßgrößen in einen Zielklassifikator direkt eine Eingruppierung eines Objekts in eine von mehreren Zielklassen, beispielsweise vorausfahrendes Fahrzeug, entgegenkommendes Fahrzeug, Hindernis auf der Fahrbahn, Lkw-Aufbau, Brücke über die Fahrbahn usw. vorzunehmen.

Zusätzliche Meßmöglichkeiten der Radar-Antennenanordnung wie beispielsweise eine grobe Richtungsauflösung nach mehreren Winkelbereichen, insbesondere eine azimutale Unterteilung des Überwachungsbereichs in mehrere Teil-Winkelbereiche kann zum einen eine weitere Präzisierung der Ortsbestimmung eines Objekts erlauben und zum anderen eine Verifizierung der für die erfindungsgemäße Signalverarbeitung gemachten Annahmen und/oder eine Einbeziehung einer Abweichung von diesen Annahmen als Korrekturgröße ermöglichen.

Neben der beschriebenen und bevorzugten Anwendung des erfindungsgemäßen Verfahrens in einer Radaranordnung eines Kraftfahrzeugs sind in entsprechender Weise Einsatzfälle denkbar und vorteilhaft, die eine unter den gegebenen Randbedingungen als zumindest näherungsweise eben anzusehende Fläche im Überwachungsbereich einer Radaranordnung aufweisen wie beispielsweise Flugverkehr, See- und Binnenschiffahrt, Flughafen-Rollbahnen, Schienenverkehr und ähnliche.

Die Erfindung ist nachfolgend anhand eines Ausführungsbeispiels unter Bezugnahme auf die Abbildungen noch weiter veranschaulicht. Dabei zeigt:
- Fig. 1: ein Interferenzfeld im Überwachungsbereich eines Kfz-Radars
- Fig. 2: eine Intensitätsmodulation für eine erste Objekthöhe
- Fig. 3: eine Intensitätsmodulation für eine zweite Objekthöhe

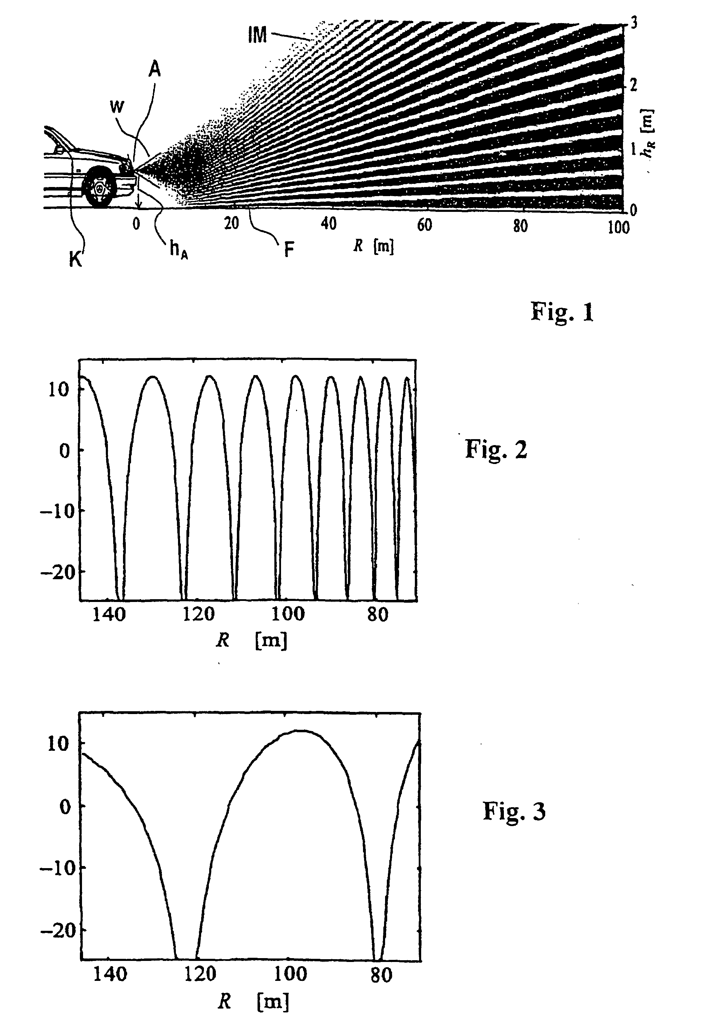

Bei der in Fig. 1 skizzierten Modulation bewegt sich ein Kraftfahrzeug K auf einer im wesentlichen ebenen Fahrbahn F. Eine im Frontbereich des Kraftfahrzeugs K angeordnete Antennenanordnung A mit einem in Fahrtrichtung weisenden Überwachungsbereich ist in gegebener Höhe h über der Fahrbahn angeordnet und weist ein Antennendiagramm mit einem vertikalen Öffnungswinkel W auf, der neben der direkten Ausleuchtung des Überwachungsbereichs auch eine Ausleuchtung der Fahrbahn umfaßt. Durch Überlagerung von Signalanteilen mit direktem Signalweg zur Radaranordnung und Signalanteilen mit Signalwegen über eine Reflexion an der Fahrbahnoberfläche ergibt sich das in Grautönen abgestufte Interferenzmuster IM. Entlang der Fahrbahn in Richtung vor dem Fahrzeug ist eine Entfernungsskala aufgetragen. Senkrecht dazu ist eine Skala für eine Objekthöhe h_{R} eingetragen. Dunkle Stellen des Interferenzmusters stehen dabei für konstruktive Interferenz, helle Stelle für destruktive Interferenz von direktem und reflektiertem Signalanteil. Die Bewegung eines Objekts konstanter Höhe über der Fahrbahn F im Überwachungsbereichs der Radars relativ zu der Radaranordnung entspricht einer zur Fahrbahnoberfläche F parallelen Schnittlinie durch das Interferenzmuster IM. Die Bewegung entlang einer solchen Schnittlinie entspricht wiederum einer Intensitätsmodulation der in der Radaranordnung überlagert empfangenen Echosignale. Wie leicht ersichtlich ist, ist das Muster der Intensitätsmodulation über dem dabei zurückgelegten Weg sowohl von der Höhe des Objekts h_{R} über der Fahrbahn als auch von der Entfernung R des Objekts von der Antennenanordnung abhängig und für eine Kombination dieser beiden Größen charakteristisch.

Fig. 2 zeigt ein erstes Beispiel einer Intensitätsmodulation über der Objektentfernung R, wobei als Ordinate des Diagramms der relative Radarpegel in dB aufgetragen ist. Als Zielhöhe sei in diesem Beispiel eine Höhe h_{R}=5 m angenommen. Aus der Modulation der Intensität kann beispielsweise für eine Anfangsentfernung der Messung von Rₒ≈140 m eine Periodenlänge der Intensitätsmodulation von ca. 14 m gemessen werden, woraus sich anhand einer vorgegebenen Berechnungsvorschrift oder einer tabellarischen Zuordnungsvorschrift eine geschätzte Zielhöhe h_{R} von 5 m bestimmen läßt. Für andere Anfangsentfernungen Rₒ des Objekts ergeben sich bei gleicher Objekthöhe andere Periodenlängen, aus der Kombination von Anfangsentfernung und Periodenlänge ist jedoch immer eindeutig eine Zielhöhe zuordenbar. Die Relativgeschwindigkeit zwischen Objekt und Radaranordnung braucht dabei nicht konstant zu sein. Die Größen der anfänglichen Zielentfernung und der Periodenlänge können aber in entsprechender Umrechnung durch eine Periodenzeitdauer und eine mittlere Geschwindigkeit als Eingangsgrößen für die Höhenschätzung ersetzt werden.

Bei dem in Fig. 3 skizzierten Beispiel ist in wesentlicher Abweichung von Fig. 2 eine wesentlich geringere Objekthöhe von h_{R}=1 m angenommen. Es zeigt sich bei der daraus resultierenden Intensitätsmodulation bei ähnlicher anfänglicher Objektentfernung eine wesentlich größere Periodenlänge von ca. 50 m, so daß offensichtlich die Periodenlänge signifikant von der Objekthöhe abhängig ist und als Meßgröße zur Schätzung der Objekthöhe geeignet ist.

Für reflektierende Gegenstände in der Fahrbahn wie Schachtabdeckungen oder Dehnfugen ist keine Interferenzsituation gegeben. Die Echos von solchen Objekten zeigen daher keine periodische Intensitätsmodulation bei der Bewegung des Fahrzeugs relativ zu diesen Objekten. Solche Objekte können daher aufgrund ihrer im wesentlichen konstanten Echosignalintensität als zur Fahrbahn gehörig erkannt und entsprechend bewertet werden. Reflektierende Objekte geringer Höhe über der Fahrbahn, die im Regelfall irrelevant für die Bewertung der Verkehrssituation sind, treten aufgrund eines Empfindlichkeitsminimums im fahrbahnnahen Bereich des Interferenzmusters IM bei den Empfangssignalen kaum in Erscheinung und sind somit vorteilhafterweise als für die übrige Objektdetektion störende Überlagerung von vornherein ausgeblendet.

Die Erfindung ist nicht auf die beschriebenen Ausführungsbeispiele beschränkt, sondern im Rahmen fachmännischen Könnens in mancherlei Weise abwandelbar. Insbesondere kann die erfindungsgemäße Signalverarbeitung mit anderen Signalverarbeitungsverfahren zur weiter verbesserten Bewertung einer Situation im Überwachungsbereich eines Radars kombiniert werden. Beispielsweise kann wie beschrieben eine zusätzliche azimutale Winkelauflösung des Radars benutzt werden. Auch der Einsatz einer bistatischen Antennenkonfiguration ist denkbar, wobei sich bei der vertikal bistatischen Anordnung ein komplexeres Interferenzmuster ergibt.

## Patentansprüche

1. Verfahren zur Klassifikation eines Straßenverkehrsobjektes,
bei dem die Entfernung des Straßenverkehrsobjektes mittels einer Radaranordnung bestimmt und
auf Basis der bestimmten Entfernung sowie einer zusätzlich erfassten Höhe des Straßenverkehrsobjektes eine Klassifikation des Straßenverkehrsobjektes durchgeführt wird,
**dadurch gekennzeichnet,**
**dass** durch die Radaranordnung sowohl die Entfernung als auch die Höhe geschätzt wird, indem:
a) eine zeitliche Veränderung der Entfernung des Objekts von der Radaranordnung bestimmt und
b) eine Intensitätsmodulation des Empfangssignals gemessen und
c) aus dem Verlauf der Intensitätsmodulation über der Objektentfernung eine Schätzung über die Höhe des Straßenverkehrsobjektes über einer reflektierenden Fläche abgeleitet wird,
und **dass** der Verlauf der Intensitätsmodulation über der Objektentfernung oder daraus abgeleitete Größen als Eingangsgrößen der Objektklassifikation verwandt werden,
wobei die Klassifikation des Straßenverkehrsobjektes nicht ausschließlich nur zwischen Ground-Level-Objekten und Overhead-Objekten unterscheidet.

2. Verfahren zur Klassifikation eines Straßenverkehrsobjektes nach Anspruch 1, **dadurch gekennzeichnet, dass** aus dem Verlauf der Intensitätsmodulation über der Objektentfernung oder daraus abgeleiteten Größen eine Aussage über das Unterschreiten einer kritischen Mindest- oder das Überschreiten einer kritischen Maximalhöhe abgeleitet wird.

3. Verfahren zur Klassifikation eines Straßenverkehrsobjektes nach Anspruch 1 oder 2, **dadurch gekennzeichnet, dass** als Parameter des Verlaufs der Intensitätsmodulation über der Objektentfernung eine Periodenlänge der Intensitätsmodulation bestimmt wird.

4. Verfahren zur Klassifikation eines Straßenverkehrsobjektes nach einem der Ansprüche 1 bis 3, **dadurch gekennzeichnet, dass** der Verlauf der Intensitätsmodulation über der Entfernung oder daraus abgeleitete Größen mit einem auf einer Interferenz von Signalanteilen eines direkten und eines an der ebenen Fläche reflektieren Signalwegs zwischen Objekt und Radaranordnung beruhenden Modulationsmuster verknüpft werden.

5. Verfahren zur Klassifikation eines Straßenverkehrsobjektes nach einem der Ansprüche 1 bis 4, **dadurch gekennzeichnet, dass** keine explizite Höhe bestimmt wird.

6. Verfahren zur Klassifikation eines Straßenverkehrsobjektes nach einem der Ansprüche 1 bis 5, **dadurch gekennzeichnet, dass** zusätzlich eine Unterscheidung des Straßenverkehrsobjektes nach mehreren Zielklassen umfassend vorausfahrendes Fahrzeug, entgegenkommendes Fahrzeug, Hindernis auf der Straße, LKW-Aufbau, Brücke über die Fahrbahn vorgenommen wird.

## Claims

1. Method for classification of a road traffic object for which the distance to the road traffic object is determined by means of a radar arrangement, and the road traffic object is classified on the basis of the determined distance and an additionally detected height of the road traffic object,
**characterized**
**in that** the radar arrangement estimates both the distance and the height, in that:
a) the rate of change of the distance to the object is determined by the radar arrangement, and
b) any intensity modulation on the received signal is measured, and
c) an estimate of the height of the road traffic object above a reflective surface is derived from the profile of the intensity modulation over the object distance,
and **in that** the profile of the intensity modulation over the object distance or variables derived from it is or are used as input variables for the object classification,
with the classification of the road traffic object not distinguishing only between ground level objects and overhead objects.

2. Method for classification of a road traffic object according to Claim 1, **characterized in that** a statement above a critical minimum height being undershot or critical maximum height being overshot is derived from the profile of the intensity modulation over the object distance, or variables derived from this.

3. Method for classification of a road traffic object according to Claim 1 or 2, **characterized in that** a period length of the intensity modulation is determined as a parameter of the profile of the intensity modulation over the object distance.

4. Method for classification of a road traffic object according to one of Claims 1 to 3, **characterized in that** the profile of the intensity modulation over the distance, or variables derived from it, is or are logically linked with a modulation pattern which is based on interference of signal components of a direct signal path and of a signal path which is reflected on the flat surface, between the object and the radar arrangement.

5. Method for classification of a road traffic object according to one of Claims 1 to 4, **characterized in that** no explicit height is determined.

6. Method for classification of a road traffic object according to one of Claims 1 to 5, **characterized in that** a distinction is also drawn for the road traffic object on the basis of a number of target classes comprising a vehicle travelling in front, an approaching vehicle, an obstruction on the road, a goods vehicle structure or a bridge over the roadway.

## Revendications

1. Procédé pour la classification d'un objet de la circulation routière dans lequel la distance de l'objet de la circulation routière est déterminée au moyen d'un dispositif radar et la classification de l'objet de la circulation routière est réalisée sur la base de la distance déterminée ainsi que de la hauteur enregistrée de l'objet de la circulation routière,
**caractérisé en ce que** la distance de même que la hauteur sont évaluées par le dispositif radar,
a) le dispositif radar déterminant une variation de la distance de l'objet au cours du temps et
b) mesurant une modulation de l'intensité du signal de réception et
c) dérivant une estimation de la hauteur de l'objet de la circulation routière au-dessus d'une surface réfléchissante à partir de l'évolution de la modulation d'intensité en fonction de la distance de l'objet,
et **en ce que** l'évolution de la modulation d'intensité en fonction de la distance de l'objet ou bien des grandeurs qui en sont dérivées sont utilisées comme grandeurs d'entrée de la classification de l'objet, la classification de l'objet de la circulation routière ne discriminant pas exclusivement entre les objets au sol et les objets aériens.

2. Procédé pour la classification d'un objet de la circulation routière selon la revendication 1, **caractérisé en ce que** l'évolution de la modulation d'intensité en fonction de la distance de l'objet ou bien des grandeurs qui en sont dérivées fournissent une information sur le passage au-dessous d'une hauteur critique minimale ou bien le dépassement d'une hauteur critique maximale.

3. Procédé pour la classification d'un objet de la circulation routière selon la revendication 1 ou 2, **caractérisé en ce qu'**on définit une longueur de période de la modulation d'intensité comme paramètre de l'évolution de la modulation d'intensité en fonction de la distance de l'objet.

4. Procédé pour la classification d'un objet de la circulation routière selon une des revendications 1 à 3, **caractérisé en ce que** l'évolution de la modulation d'intensité en fonction de la distance ou bien des grandeurs qui en sont dérivées sont liées à un modèle de modulation reposant sur une interférence entre des composantes de signal d'un chemin de signal direct et d'un chemin de signal réfléchi sur la surface plane, entre l'objet et le dispositif radar.

5. Procédé pour la classification d'un objet de la circulation routière selon une des revendications 1 à 4, **caractérisé en ce qu'**on ne définit aucune hauteur explicite.

6. Procédé pour la classification d'un objet de la circulation routière selon une des revendications 1 à 5, **caractérisé en ce qu'**on entreprenne en plus la discrimination de l'objet de la circulation routière selon plusieurs classes de cibles englobant le véhicule circulant à l'avant, le véhicule venant en face, l'obstacle sur la route, le camion, le pont au-dessus de la voie de circulation.
